# EUROPEAN PATENT SPECIFICATION

(11) **EP 2 994 511 B1**
(45) Date of publication and mention of the grant of the patent: **01.03.2017**
(21) Application number: 14730023.0
(22) Date of filing: 09.05.2014
(51) Int. Cl.: C09J 123/08, C08L 23/08

(54) **IMPROVED STRENGTH ROOM TEMPERATURE FLUID ADHESIVE COMPOSITION AND ARTICLES MADE WITH THE SAME**
FLÜSSIGKEITSHAFTZUSAMMENSETZUNG MIT VERBESSERTER FESTIGKEIT BEI RAUMTEMPERATUR UND DAMIT HERGESTELLTE ARTIKEL
COMPOSITION ADHÉSIVE FLUIDE À TEMPÉRATURE AMBIANTE À RÉSISTANCE RENFORCÉE ET ARTICLES RÉALISÉS À PARTIR DE CETTE COMPOSITION

(30) Priority: 10.05.2013 US 201361821795 P
(43) Date of publication of application: 16.03.2016
(73) Proprietor: H. B. Fuller Company, St. Paul, Minnesota 55164-0683 (US)
(72) Inventor: SIMONE, Peter, M., Woodbury, MN 55129 (US); MALCOLM, David, B., Maplewood, MN 55109 (US)
(74) Representative: Hansen, Norbert
(86) International application number: PCT/US2014/037491
(87) International publication number: WO 2014/183031

(56) References cited:
- WO-A1-2009/108685
- WO-A1-2011/072237

## Description

### BACKGROUND

Adhesives are often used to bond substrates together so as to maintain the two substrates in a fixed relation to each other. In the area of industrial adhesives, hot melt adhesives are commonly used in a variety of applications that require bonding two substrates together including, e.g., packaging applications (e.g., corrugated board and cardboard), nonwoven applications (e.g., disposable articles), bookbinding, and footwear manufacturing.

Hot melt adhesives are applied at elevated temperatures of from about 107°C (225°F) to about 191 °C (375°F). The necessary equipment to keep the hot melt at the elevated temperature includes pre-melters, tanks, and heated hoses. There is a significant upkeep involved with this equipment

It would be desirable to have an adhesive composition that could be shipped and supplied to the customer as a room temperature fluid, put in a tank and pumped as a room temperature fluid, but then change form with at least heating to become a molten blend that can be used to bond two substrates together and then cool to a fused solid material.

It would be further desirable if such a composition had heat resistance comparable to high performing traditional hot melts and superior hot strength and tensile properties.

### SUMMARY

In one aspect, the invention features a composition including at least one of an emulsion, dispersion, and suspension including, a liquid carrier selected from the group consisting of oil, olefin oligomers, polybutene, polyisoprene, and combinations thereof, and a solid particle including an ethylene copolymer where the ethylene copolymer has a Melt Index as tested by ASTM D 1238 (190°C/2.16 kg) of no greater than about 2.

In some embodiments, the ethylene copolymer has a Melt Index as tested by ASTM D 1238 (190°C/2.16 kg) of no greater than about 1. In other embodiment, the ethylene copolymer is ethylene vinyl acetate. In one embodiment, the ethylene copolymer has a vinyl acetate content of greater than 10 % by weight.

The composition can be a fluid at room temperature. In one embodiment, the composition has a molten viscosity of between about 11,000 and 25,000 cps at 176.7°C (350°F).

In another aspect, the invention features a fused solid material formed from the composition. In some embodiments, the fused solid material has a Maximum Tensile Strength of greater than 1654.7 kPa (240 psi). In other embodiments, the fused solid material has a Maximum Tensile Strength of greater than about 2068.4 kPa (300 psi). The fused solid material can have an Energy at Break of greater than 0.18 Joules. In other embodiments, the fused solid material has an Energy at Break of greater than about 0.6 Joules.

The fused solid material can have a PAFT of greater than 54.4°C (130°F). In some embodiments, the fused solid material has a PAFT of greater than about 62.8°C (145°F). The fused solid material can have Fiber Tear of greater than about 70 % at about -40°C (-40°F) and greater than about 70% at about 60°C (140°F) when tested according to the Fiber Tear Test Method. In other embodiments, the fused solid material exhibits a Bond Strength of at least about 22.3 N (5 lbf).

In one aspect, the invention features a packaging construction including a substrate; a fused solid material including, at a point prior to application, at least one of an emulsion, dispersion, and suspension including, a liquid carrier selected from the group consisting of oil, olefin oligomers, polybutene, polyisoprene, and combinations thereof, and a solid particle comprising an ethylene copolymer with a Melt Index as tested by ASTM D 1238 (190°C/2.16 kg) of less than 2.0, the fused solid material exhibiting a Bond Time at 198.9 °C (390 F) of less than about 1.0 seconds. In some embodiments, the packaging construction is selected from a group consisting of a case, a carton, or a tray. In one embodiment, the case, carton or tray is stored in a refrigerator or freezer. In other embodiments, the fused solid material of the packaging construction exhibits a PAFT of greater than 65.6°C (150°F). In still other embodiments, the fused solid material of the packaging construction exhibits a Bond Strength of at least about 22.3 N (5 lbf).

### GLOSSARY

In reference to the invention, these terms have the meanings set forth below:
The term "room temperature" refers to an indoor ambient air temperature of from about 15.6°C (60°F) to about 32.2°C (90°F).
The term "fluid" refers to a composition that continually flows or deforms under an applied shear stress.

### DETAILED DESCRIPTION

The compositions according to this invention comprise solid particles comprising one or more polymers, which are emulsified, dispersed and or suspended in a liquid carrier.

At some point prior to application, the composition is fluid at room temperature. The composition forms a substantially homogeneous, molten blend when energy activated at a processing temperature in excess of 60°C (140°F). The substantially homogenous molten blend becomes a fused solid material when it cools to room temperature. The fused solid material can be thermoplastic. The composition can be an adhesive.

The fused solid material has good tensile properties. The fused solid material can have a Maximum Tensile Strength of greater than 1654.7 kPa (240 psi), or even greater than about1792.6 kPa (260 psi), or even greater than about 2068.4 kPa (300 psi). The fused solid material can have a Strain @ Break of greater than 110%, or even greater than about 200%, or even greater than about 250%, or even greater than about 300%. The fused solid material can have an Energy @ Break of greater than 0.18 Joules, or greater than about 0.30 Joules, or even greater than about 0.60 Joules.

The fused solid material has good heat resistance. The fused solid material can have a PAFT of greater than 54.4°C (130°F), greater than about 60°C (140°F), greater than about 62.8°C (145°F) or even greater than about 65.6°C (150°F).

The fused solid material gives good low and high temperature bonding resulting in fiber tear of greater than about 70% when tested according to the Fiber Tear Test Method at temperatures of about -40°C (-40°F) and about 60°C (140°F).

The fused solid material gives high initial strength. The fused solid material can have a Bond Time at 198.9°C (390°F) of less than about 1.2 seconds, less than about 1.0 seconds, or even less than 0.8 seconds when tested by the Bond Time Test Method.

The fused solid material results in a Bond Strength of at least about 17.8 N (4.0 lbf), as least about 20.0 N (4.5 lbf), as least about 22.3 N (5.0 lbf), or even at least about 24.5 N (5.5 lbf).

The substantially homogeneous molten blend has a melt viscosity at 177°C (350°F) of less than about 25,000 cps, less than about 20,000 cps, between about 5,000 and 30,000 cps or even between about 11,000 and 25,000 cps.

### SOLID PARTICLE/S

The composition includes at least one solid particle comprising an ethylene copolymer. The ethylene copolymer has a melt index as tested by ASTM D 1238 (190°C/2.16 kg) of less than 2 g/ 10 minutes, less than 1.5 g/10 minutes, less than 1 g/10 minutes, no greater than about 2 g/10 minutes, no greater than about 1 g/10 minutes, , or even from about 0.5 to about 1.8 g/10 minutes The comonomer can be vinyl acetate; alternately the comonomer can be an acrylate (e.g. methyl methacrylate, butyl acrylate). The polymer can contain at least about 10 % by weight comonomer, at least about 15 % by weight comonomer, at least about 18% by weight comonomer, or even between about 10% and 28% comonomer, or even from about 15 to about 20% by weight comonomer

The solid particle comprising an ethylene copolymer with a melt index of no greater than 2 g/10 minutes is present in the composition at least about 5% by weight, at least about 10% by weight, at least about 15% by weight, from about 10% to about 40% by weight, or even from about 15% to about 30% by weight.

Useful ethylene vinyl-acetate copolymers with a melt index of no greater than 2 g/10 minutes include ATEVA 1221 (12% Vinyl- Acetate, MI=0.8), ATEVA1806A (18% Vinyl-Acetate, MI=0.7) and ATEVA 1813 (18% Vinyl-Acetate, MI=1.6) (available from Celanese Chemical Company (Dallas, Texas)).

The solid particle/s can include one or more additional polymers. The polymers can be derived from at least one of ethylene, propylene or butene. The polymers can further be derived from additional monomers such as styrene, acrylic acid and its derivatives, methacrylic acid and its derivatives, higher order polyolefins, acid anhydrides (e.g. maleic anhydride), isoprene, butadiene, vinyl esters (e.g. vinyl acetate), vinyl ethers, and hydrogenated versions thereof. The polymer can be derived from any combination of monomers listed herein.

Useful additional polymers include EPOLENE E-43P (Maleic-anhydride grafted polypropylene power) available from Westlake Chemical Company (Houston, Texas) and higher melt index ethylene-vinyl acetate copolymers such as MICROTHENE F FE 53200 (Ethylene-vinyl acetate, 9% Vinyl-acetate, MI=8) available from Lyondell Chemical Company (Houston, Texas).

In some embodiments, two or more polymers can be used having different melt indices.

The solid particle/s have an average diameter of less than about 500 µm, less than
about 300 µm, or even less than about 100 µm.

The total amount of solid particle/s present in the composition is at least about 10 % by weight, at least about 20% by weight, at least about 30% by weight, between about 10 % and about 70 % by weight, or even between about 15% and about 60% by weight.

### LIQUID CARRIER

The liquid carrier is a liquid phase material at room temperature. Suitable materials for the liquid carrier include plasticizers, e.g., naphthenic oils, paraffinic oils (e.g., cycloparaffin oils), mineral oils, phthalate esters, adipate esters, olefin oligomers (e.g., oligomers of polypropylene, polybutene, and hydrogenated polyisoprene), polybutenes, polyisoprene, hydrogenated polyisoprene, polybutadiene, benzoate esters, animal oil, plant oils (e.g. castor oil, soybean oil), derivatives of oils, glycerol esters of fatty acids, polyesters, polyethers, lactic acid derivatives and combinations thereof.

The liquid carrier is present at least about 20 % by weight, at least about 30% by weight, between about 20 % and about 70% by weight, or even between about 30% and about 60% by weight.

Useful commercially available liquid carriers include plasticizers sold under the NYFLEX series of trade designations including NYFLEX 222B from Nynas Corporation (Houston, Texas), KAYDOL OIL from Sonnebom (Tarrytown New York) PARAPOL polybutene from Exxon Mobil Chemical Company (Houston, Texas), OPPANOL polyisobutylene from BASF (Ludwigsjhafen, Germany), KRYSTOL 550 mineral oil from Petrochem Carless Limited (Surrey, England), CALSOL 550 oil from Calmnet Specialty Products Partners, LP (Indianapolis, Indiana), PURETOL 15 mineral oil from Petro Canada Lubricants Inc. (Mississauga, Ontario) and ARCHER-S RBD SOYBEAN OIL from Archer Daniels Midland Company (Decatur, Illinois).

### TACKIFYING AGENT

The composition can optionally include a tackifying agent. Useful tackifying agents have Ring and Ball softening point of less than about 140°C, less than about 130°C, less than about 100°C, or even between about 100°C to about 140°C. The tackifying agent can be fluid or solid at room temperature. Suitable classes of tackifying agents include, e.g., aromatic, aliphatic and cycloaliphatic hydrocarbon resins, mixed aromatic and aliphatic modified hydrocarbon resins, aromatic modified aliphatic hydrocarbon resins, and hydrogenated versions thereof; terpenes, modified terpenes and hydrogenated versions thereof; natural rosins, modified rosins, rosin esters, and hydrogenated versions thereof; low molecular weight polylactic acid; and combinations thereof. Examples of useful natural and modified rosins include gum rosin, wood rosin, tall oil rosin, distilled rosin, hydrogenated rosin, dimerized rosin and polymerized rosin. Examples of useful rosin esters include e.g., glycerol esters of pale wood rosin, glycerol esters of hydrogenated rosin, glycerol esters of polymerized rosin, pentaerythritol esters of natural and modified rosins including pentaerythritol esters of pale wood rosin, pentaerythritol esters of hydrogenated rosin, pentaerythritol esters of tall oil rosin, and phenolic-modified pentaerythritol esters of rosin. Examples of useful polyterpene resins include polyterpene resins having a softening point, as determined by ASTM method E28-58T, of from about 10°C to about 140°C, hydrogenated polyterpene resins, and copolymers and terpolymers of natural terpenes (e.g. styrene-terpene, alpha-methyl styrene-terpene and vinyl toluene-terpene). Examples of useful aliphatic and cycloaliphatic petroleum hydrocarbon resins include aliphatic and cycloaliphatic petroleum hydrocarbon resins having Ring and Ball softening points of from about 10°C to about 140°C (e.g., branched and unbranched C5 resins, C9 resins, and C10 resins) and the hydrogenated derivatives thereof.

Useful tackifying agents are commercially available under a variety of trade designations including, e.g., the ESCOREZ series of trade designations from Exxon Mobil Chemical Company (Houston, Texas) including ESCOREZ 5400, ESCOREZ 5415, ESCOREZ 5600, ESCOREZ 5615, and ESCOREZ 5690, the EASTOTAC series of trade designations from Eastman Chemical (Kingsport, Tennessee) including EASTOTAC H-100R, EASTOTAC H-100L, and EASTOTAC H130W, the WINGTACK series of trade designations from Cray Valley HSC (Exton, Pennsylvania) including WINGTACK 86, WINGTACK EXTRA, and WINGTACK 95 and the PICCOTAC and KRISTALEX series of trade designations from Eastman Chemical Company (Kingsport, Tennessee) including, e.g., PICCOTAC 8095 and KRISTALEX 3100.

### WAX

The composition can include a wax. Useful classes of wax include, e.g., paraffin waxes, microcrystalline waxes, high density low molecular weight polyethylene waxes, byproduct polyethylene waxes, polypropylene waxes, Fischer-Tropsch waxes, oxidized Fischer-Tropsch waxes, functionalized waxes such as acid, anhydride, and hydroxy modified waxes, animal waxes, vegetable waxes (e.g. soy wax) and combinations thereof. Useful waxes are solid at room temperature and preferably have a Ring and Ball softening point of from 50°C to 170°C. Useful waxes are commercially available from a variety of suppliers including EPOLENE N and C series of trade designations from Westlake Chemical Corporation (Houston, Texas) including e.g. EPOLENE N-21, EPOLENE N-15, the LICOCENE series of trade designations from Clariant International Ltd. (Muttenz, Switzerland) including e.g. LICOCENE PP 6102 and LICOCENE PE 4201 and the A-C trade designations from Honeywell International Inc. (Morristown, NJ) including e.g. A-C 8 and A-C 1660.

The composition can include less than about 30% by weight, less than about 20% by weight, less than about 10% by weight of a wax, or even from about 10% by weight to about 25% by weight of a wax.

### ADDITIONAL COMPONENTS

The composition optionally includes additional components including, e.g., blowing agents (e.g. water), stabilizers, antioxidants, additional polymers (e.g. polyesters, polyurethanes and polyaznides), adhesion promoters, ultraviolet light stabilizers, rheology modifiers, biocides, corrosion inhibitors, dehydrators, colorants (e.g., pigments and dyes), fillers, surfactants, flame retardants, superabsorbents and combinations thereof. Useful antioxidants include, e.g., pentaerythritol tetrakis[3,(3,5-di-tert-butyl-4-hydroxyphenyl)propionate], 2,2'-ethylene bis(4-methyl-6-tert-butylphenol), phosphites including, e.g., tris-(p-nonylphenyl)-phosphite (TNPP) and bis(2,4-di-tert-butylphenyl)4,4'-diphenylene-diphosphonite, di-stearyl-3,3'-thiodipropionate (DSTDP), and combinations thereof. Useful antioxidants are commercially available under a variety of trade designations including, e.g., the IRGANOX series of trade designations including, e.g., IRGANOX 1010, IRGANOX 565, and IRGANOX 1076 hindered phenolic antioxidants and IRGAFOS 168 phosphite antioxidant, all of which are available from BASF Corporation (Florham Park, New Jersey), and ETHYL 702 4,4'-methylene bis(2,6-di-tert-butylphenol). When present, the composition preferably includes from about 0.1 % by weight to about 2 % by weight antioxidant.

### MAKING THE COMPOSITION

The composition can be made at room temperature. The solid particles can be added to the liquid with mixing until the composition is homogeneous.

If a tackfying agent is used it can be blended into the liquid (optionally with heat) in a premix. The ratio of tackifying agent to liquid in the premix can range from 0.2: 1 to 1: 0.5. If the premix is heated, the temperature is reduced to at least 60°C (140°F) prior to adding the solid particles. If wax is used it can also be blended into the premix. Alternately wax or tackifyer can be added as an additional solid particle.

Other optional ingredients (e.g. antioxidants, ultraviolet light stabilizers, etc.) can be included in the premix; alternately they can be added to the liquid after the solid particles.

### USES FOR THE COMPOSITION

The composition can be applied on or incorporated in a variety of articles including, e.g., films (e.g., polyolefin films (e.g., polyethylene and polypropylene), polyester film, metalized polymer film, multi-layer film, and combinations thereof), fibers, substrates made from fibers (e.g., virgin fibers, recycled fibers, synthetic polymer fibers (e.g., nylon, rayon, polyesters, acrylics, polypropylenes, polyethylene, polyvinyl chloride, polyurethane), cellulose fibers (e.g., natural cellulose fibers such as wood pulp), natural fibers (e.g., cotton, silk and wool), and glass fibers, and combinations thereof), release liners, porous substrates, cellulose substrates, sheets (e.g., paper, and fiber sheets), paper products, woven and nonwoven webs (e.g., webs made from fibers (e.g., yarn, thread, filaments, microfibers, blown fibers, and spun fibers) perforated films, and combinations thereof), tape backings, and combinations thereof.

The composition is useful for bonding a variety of substrates including, e.g., cardboard, coated cardboard, paperboard, fiber board, virgin and recycled kraft, high and low density kraft, chipboard, treated and coated kraft and chipboard, and corrugated versions of the same, clay coated chipboard carton stock, composites, leather, polymer film (e.g., polyolefin films (e.g., polyethylene and polypropylene), polyvinylidene chloride films, ethylene vinyl acetate films, polyester films, metalized polymer film, multi-layer film, and combinations thereof), fibers and substrates made from fibers (e.g., virgin fibers, recycled fibers, synthetic polymer fibers, cellulose fibers, and combinations thereof), release liners, porous substrates (e.g., woven webs, nonwoven webs, and perforated films), cellulose substrates, sheets (e.g., paper, and fiber sheets), paper products, tape backings, and combinations thereof. Useful composites include, e.g., chipboard laminated to metal foil (e.g., aluminum foil), which optionally can be laminated to at least one layer of polymer films, chipboard bonded to film, Kraft bonded to film (e.g., polyethylene film), and combinations thereof.

The composition is useful in bonding a first substrate to a second substrate in a variety of applications and constructions including, e.g., packaging, bags, boxes, cartons, cases, trays, multi-wall bags, articles that include attachments (e.g., straws attached to drink boxes), ream wrap, cigarettes (e.g., plug wrap), filters (e.g., pleated filters and filter frames), bookbinding, footwear, disposable absorbent articles (e.g., disposable diapers, sanitary napkins, medical dressings (e.g., wound care products), bandages, surgical pads, drapes, gowns, and meat-packing products), paper products including, e.g., paper towels (e.g., multiply use towels), toilet paper, facial tissue, wipes, tissues, towels (e.g., paper towels), sheets, mattress covers, and components of absorbent articles including, e.g., an absorbent element, absorbent cores, impermeable layers (e.g., backsheets), tissue (e.g., wrapping tissue), acquisition layers and woven and nonwoven web layers (e.g., top sheets, absorbent tissue), and combinations thereof.

The composition is useful in forming packaging constructions that are exposed to low temperatures for an extended period of time (e.g. where the packaging construction is stored in a refrigerator or freezer). The composition is useful in forming packaging constructions that are exposed to temperatures of less than about 10 °C (50 °F), or even less than about 4 °C (40 °F).

The composition is also useful in forming laminates of porous substrates and polymer films such as those used in the manufacture of disposable articles including, e.g., medical drapes, medical gowns, sheets, feminine hygiene articles, diapers, adult incontinence articles, absorbent pads (e.g., for animals (e.g., pet pads) and humans (e.g., bodies and corpses)), and combinations thereof.

The composition can be applied to a substrate in any useful form including, e.g., as fibers, as a coating (e.g., a continuous coatings and discontinuous coatings (e.g., random, pattern, and array)), as a bead, as a film (e.g., continuous films and discontinuous films), and combinations thereof, using any suitable application method including, e.g., slot coating, spray coating (e.g., spiral spray, random spraying, and random fiberization (e.g., melt blowing)), foaming, extrusion (e.g., applying a bead, fine line extrusion, single screw extrusion, and twin screw extrusion), wheel application, noncontact coating, contacting coating, gravure, engraved roller, roll coating, transfer coating, screen printing, flexographic, and combinations thereof.

### METHODS OF USE

The composition is stored at room temperature in a reservoir. When it is time to use the composition, it is pumped through a pressurizing apparatus (e.g. pump) into a vessel. From the vessel, the composition enters the reactor. The reactor heats and optionally mixes the composition. The heat can be generated by any means. When the composition exits the reactor, it is a molten blend. The molten blend then enters the dispenser for application.

In Figure 8 of WO 2009/108685 A1 there is a schematic representation of various elements/order of elements that can be utilized to deliver the composition to a reactor.

The application system can include a reactor (sometimes known as a heat exchanger) to energy activate the composition and/or a heated pipe/vessel to energy activate the composition. In some, embodiments the composition is pre heated prior to entering the reactor. Suitable reactors are known in the art and include those reactors disclosed in WO 2009/108685 A1, US 7221859 B2 and US 7623772 B2.

The invention will now be described by way of the following examples. All parts, ratios, percents and amounts stated in the Examples are by weight unless otherwise specified.

### EXAMPLES

### Test Procedures

Test procedures used in the examples and throughout the specification, unless stated otherwise, include the following.

### Method for Determining Molten Viscosity

Viscosity is determined in accordance with ASTM D-3236 entitled, "Standard Test Method for Apparent Viscosity of Hot Melt Adhesives and Coating Materials," (October 31, 1988) using a Brookfield Thermosel Viscometer Model RVDV 2+ and an appropriate spindle. The results are reported in centipoise ("cps").

### Peel Adhesion Failure Temperature (PAFT) to Kraft Test Method

A sample is prepared by coating the sample composition onto kraft paper by hand using a glass rod or shim to achieve a coating that is one inch (2.5 cm) wide and from 8 mils to 10 mils thick. A second sheet of kraft paper is applied to the sample composition and pressed against the same. The samples are aged at room temperature for at least 12 hours. The samples are then positioned in an oven in the peel mode such that a first sheet of kraft of the sample is held in position in the oven by a clamp, and a 100-gram weight is attached to the top edge of the second sheet of kraft. The ambient temperature in the oven is ramped from a starting temperature of 25°C to an ending temperature of 100°C at a rate of 25°C/hour. The oven automatically records the temperature at which the bond fails which occurs when the oven automatically records the temperature at which the bond fails which occurs when the weighted substrate separates and falls from the clamped substrate. A minimum of four samples is run for each sample composition.

### Shear Adhesion Failure Temperature (SAFT) to Kraft Test Method

A sample is prepared by coating an adhesive composition onto kraft paper by hand using a glass rod or shim to achieve a coating that is one inch (2.5 cm) wide and from 8 mils to 10 mils thick. A second sheet of kraft paper is applied to the sample composition and pressed against the same. The samples are aged at room temp for at least 12 hours. The samples are then positioned in an oven in the shear mode such that the first sheet of the sample is held in position in the oven by a clamp, and a 500 gram weight is suspended from the sample in the shear mode, i.e., the weight is attached to the lower edge of the second sheet of kraft. The ambient temperature in the oven is ramped from a starting temperature of 25°C to an ending temperature of 125°C at a rate of 25°C per hour. The oven automatically records the temperature at which the bond fails which occurs when the weighted substrate separates and falls from the clamped substrate. A minimum of three samples is run for each sample composition.

### Method for Determining Tensile Properties

Tensile properties are determined using ASTM D638 modified by the film thickness and aging time. Films of each sample are created by using a draw down square, which is preheated at 187.8°C (370 °F), with a cut out of 40 mils, which when cooled provides a sample film thickness of 25 mils. Each sample is heated to 370 °F (187.8 °C), poured onto a Teflon board, and quickly drawn down using the square. Once cooled, the thickness of each film is measured using a micrometer. The target film thickness is 25 mils +/- 5 mils, where 1 mil is equal to 0.001 inch. Tensile specimens are punched out of the film using a Type IV dog bone die. The thickness of the film specimen is not to vary by greater than 1 mil along the gauge length of a given specimen. Specimens are aged at room temperature for at least 12 hours prior to testing. The specimens are run on an INSTRON 4502 at 23 °C, 50 % relative humidity, and 2 inch/min extension rate. A calibrated 100 N INSTRON static load cell is used to quantify the force and an INSTRON 2663-821 Advanced Video Extensometer, calibrated using a custom calibration bar, measures the change in the gage length. BLUE HILL 2 software is used for data acquisition and analysis.

Strain at break is calculated according to the portion of ASTM D638 pertaining to "percent elongation at break," and is reported in percent (%).

Maximum tensile strength is calculated according to the portion of ASTM D638 pertaining to "tensile strength," and is reported in psi (pounds per square inch).

Energy at break is calculated by integration of the stress-strain curve, and is reported in Joules (J).

### Fiber Tear Test Method

The percentage fiber tear is the percentage of fiber that covers the area of the adhesive after two substrates, which have been previously bonded together through the adhesive, are separated by force. The percentage of fiber tear exhibited by an adhesive composition is determined as follows. A bead of the adhesive composition measuring 15.24 cm (6 inch) x 0.24 cm (3/32 inch) is applied to a first substrate of ROCKTENN 44 pound 87 % virgin liner board, using a Nordson^{®} SolidBlue™ air-open/spring-closed hot melt dispensing gun at 187.8°C (370°F). The substrate is carried on a conveyer underneath the hot melt applicator gun, which is triggered by an electronic triggering mechanism as the substrate passes by. The conveyor speed is approximately 75 feet/minute. Approximately two seconds after the bead of adhesive is applied to the first substrate, the bead of adhesive is contacted with a second substrate of ROCKTENN 44 pound 87 % virgin liner board, which is pressed against the adhesive and the first substrate with a pressure of approximately 10 pounds per square inch (psi) for a period of 2 seconds. The resulting constructions are then conditioned at room temperature for at least 12 hours and then conditioned at the specified test temperature for at least 24 hours. The substrates of the construction are then separated from one another by pulling the two substrates apart from one another by hand. The surface of the adhesive composition is observed and the percent of the surface area of the adhesive composition that is covered by fibers is detennined and recorded. A minimum of five samples are prepared and tested for each hot melt adhesive composition. The results are reported in % fiber tear.

### Bond Time Test Method

The experimental procedure for determining adhesive bond time is as follows. A 1.5 inch adhesive bead, with an application weight of 0.10 g/inch is applied to a first substrate of ROCKTENN 44 pound 87 % virgin liner board using a Nordson^{®} SolidBlue™ air-open/spring-closed hot melt dispense gun at the specified application temperature. The first substrate is secured via adhesive tape to a metal plate weighing 2.9 pounds (1.3 kg). The metal plate and substrate are carried on a conveyer underneath the hot melt applicator gun, which is triggered by an electronic triggering mechanism as the plate and substrate pass by. The conveyor speed is approximately 75 feet/minute. About two seconds after the bead of adhesive is applied to the first substrate, the bead of adhesive is contacted with a second substrate of ROCKTENN 44 pound 87 % virgin liner board, which is pressed against the adhesive and the first substrate with a pressure of approximately 10 pounds per square inch (psi). The second substrate is attached via metal clips to the pneumatic compression plate which presses it against the adhesive bead and the first substrate. After specified compression duration, the compression plate is retracted a distance of approximately 2 inches, at approximately 1.4 inches/second. The bond time (reported in seconds) is the compression time necessary for the adhesive bond between the two test substrates to support the metal plate, and prevent separation of the substrates under the static load.

### Bond Strength Test Method

Bond strength was measured by the following method. A RockTenn bond simulator modified with a force transducer was used. A first substrate of ROCKTENN 44 pound 87 % virgin corrugate liner board is carried on a conveyor at a speed of approximately 65 ft/min (20 m/min) under an application nozzle heated to a specified application temperature. The nozzle is optically activated as the substrate passes underneath, and a bead of adhesive is applied at an application weight of 34 mg/in (13 mg/cm). The conveyor then passes the first substrate onto a platform under a compression bar, to which a second substrate of ROCKTENN 44 pound 87 % virgin corrugate liner board is clamped. After a one second delay time following the application of the adhesive bead to the first substrate, the second substrate is brought into contact with the first substrate and the adhesive bead via a mechanical actuator that lowers the compression bar and joins the substrates with a pressure of 15 psi (103 kPa) for 2 seconds. A force transducer is positioned between the compression bar and the mechanical actuator, which can measure the force required to separate the two substrates as the compression bar is retracted. Prior to retraction of the compression bar the first substrate is automatically secured down to the platform, and one end of the second substrate remains clamped to the compression bar while the other end is automatically released. This results in a 90° peel configuration as the compression bar is retracted, and the second substrate is pulled away from the first. The average bond strength is taken over 10 replicate samples.

**Table 1 - Examples**

| | PHC9256* | Comparative 1 | Example 1 | Example 2 | Example 3 | Example 4 |
|---|---|---|---|---|---|---|
| ATEVA 1820 (EVA 18-3) | | 25.5 wt % | | | | |
| ATCVA 1813 (EVA 18-1.6)) | | | 25.5 wt % | | | |
| ATEVA 1806 (EVA 18-0.7) | | | | 25.5 wt % | 23.96 wt% | |
| ATEVA 1221 (EVA 12-0.8) | | | | | | 23.96 wt% |
| ARCHER-S RBD SOYBEAN OIL | | 42.70 wt % | 42.70 wt % | 42.70 wt % | 40.0 wt % | 40.0 wt % |

| | | | | | | |
|---|---|---|---|---|---|---|
| ^{*}PHC9256 is a highly heat resistant traditional hot melt adhesive intended primarily for use as a case and carton seal and available for purchase from HB Fuller Company. Comparative 1 and Examples 1-4 are dispersions. Note: The above ethylene vinyl-acetate copolymers are present in the composition in solid particle form. | | | | | | |

**Table 2 - Physical Properties of Examples**

| | PHC9256 | Comparative 1 | Example 1 | Example 2 | Example 3 | Example 4 |
|---|---|---|---|---|---|---|
| Molten Viscosity 176.7°C(350°F) | 820 | 9,300 | 11,650 | 18,850 | 15,500 | 15,450 |
| PAFT °C(°F) | 65.6 (150) | 52.2 (126) | 55.6 (132) | 67.2(153) | NA | 68.9(156) |
| SAFT °C (°F) | 93.9 (201) | 92.8 (199) | 94.4 (202) | 93.3 (200) | NA | 103.3 (218) |
| Fiber Tear at -40°C (-40°F) | NA | 100 | 100 | 100 | 100 | NA |
| Fiber Tear at -17.8°C (0°F) | NA | 100 | 100 | 100 | NA | NA |
| Fiber Tear at 4.4°C (40°F) | NA | 100 | 100 | 100 | NA | NA |
| Fiber Tear at 21.1°C(70°F) | 90 | 95 | 80 | 93 | 100 | 100 |
| Fiber Tear at 48.9°C (120°F) | 100 | 75 | 80 | 85 | | |
| Fiber Tear at 60°C (140°F) | 95 | 40 | 35 | 76 | 98 | 94 |
| Fiber Tear at 65.6°C (150°F) | | | | | 91 | 61 |
| Maximum Tensile - Strength kPa (psi) | 4261.0(618) | 1614.4 (234) | 1696.1 (246) | 2192.5 (318) | 1951.2 (283) | 2102.9 (305) |
| Strain @ Break (%) | 145 | 106 | 129 | 398 | 251 | 94 |
| Energy @ Break (joules) | .63 | 0.16 | 0.20 | 0.89 | 0.47 | 0.18 |
| Bond Time at 198.9°C (390°F) (sec) | | 1.2 | | | 0.6 | 0.6 |
| Bond Strength-Newtons (lbf) | 58.3 (13.1)^{*} | 15.6 (3.5) | 23.6 (5.3) | 28.0 (6.3) | 41.4 (9.3) | 22.7 (5.1) |

| | | | | | | |
|---|---|---|---|---|---|---|
| NA (Not Available); * Coat weight of 50 mg/in used instead of the 34 mg/in used for the other examples | | | | | | |

To make, the premix materials were put in a pint size metal mixing can and placed in a heating mantle (Glas-Col, Terre Haute, Indiana). The mantel was heated to 149°C (300°F). While heating, the premix was blended with an upright Stirrer Type RZRI mixer (Caframo, Wiarton, Ontario, Canada). Once the mantle reached 149°C, the heat was turned off and mixing continued until the sample was cooled back to room temperature. Once the premix was cooled to room temperature, the dispersions were formed by adding the articulate polymers (including those in the Table 1). The samples were mixed until homogeneous.

Other embodiments are within the claims.

## Claims

1. A composition comprising:
at least one of an emulsion, dispersion, and suspension comprising,
a liquid carrier selected from the group consisting of oil, olefin oligomers, polybutene, polyisoprene, and combinations
thereof, and
a solid particle comprising an ethylene copolymer wherein the ethylene copolymer has a Melt Index as tested by ASTM D 1238 (190°C/2.16 kg) of no greater than about 2.

2. The composition of claim 1 wherein the ethylene copolymer has a Melt Index as tested by ASTM D 1238 (190°C/2.16 kg) of no greater than about 1.

3. The composition of claim 1 wherein the ethylene copolymer is ethylene vinyl acetate.

4. The composition of claim 3 wherein the ethylene copolymer has a vinyl acetate content of greater than 10 % by weight.

5. The composition of claim 1 wherein the composition is fluid at room temperature.

6. The composition of claim 1 wherein the composition has a molten viscosity of between about 11,000 and 25,000 mPas (cps) at 176.7°C (350°F).

7. A fused solid material formed from the composition of claim 1.

8. The fused solid material of claim 7, wherein the fused solid material has a Maximum Tensile Strength of greater than 1654.7 kPa (240 psi).

9. The fused solid material of claim 7, wherein the fused solid material has an Maximum Tensile Strength of greater than about 2068.4 kPa (300 psi).

10. The fused solid material of claim 7, wherein the fused solid material has an Energy at Break of greater than 0.18 Joules.

11. The fused solid material of claim 7, wherein the fused solid material has an Energy at Break of greater than about 0.6 Joules.

12. A packaging construction comprising:
A substrate; and
A fused solid material comprising, at a point prior to application,
at least one of an emulsion, dispersion, and suspension
comprising,
a liquid carrier selected from the group consisting of oil, olefin oligomers, polybutene, polyisoprene, and combinations
thereof, and
a solid particle comprising an ethylene copolymer with a Melt Index as tested by ASTM D 1238 (190°C/2.16 kg) of less than 2.0 the fused solid material exhibiting a Bond Time at 198.9°C (390°F) of less than about 1.0 seconds.

13. The packaging construction of claim 12 wherein the construction is selected from a group consisting of a case, a carton, or a tray.

14. The packaging construction of claim 13 wherein the packaging construction is stored in a refrigerator or freezer.

15. The packaging construction of claim 12 wherein the fused solid material exhibits a Bond Strength of at least about 22.3 N (5 lbf).

## Patentansprüche

1. Eine Zusammensetzung umfassend:
mindestens eines aus einer Emulsion, Dispersion und Suspension umfassend
einen flüssigen Träger ausgewählt aus der Gruppe bestehend aus Öl, Olefinoligomeren, Polybuten, Polyisopren, und deren Kombinationen, und
ein festes Teilchen umfassend ein Ethylencopolymer, wobei das Ethylencopolymer einen Schmelzindex getestet nach ASTM D 1238 (190°C/2.16 kg) von nicht mehr als etwa 2 aufweist.

2. Die Zusammensetzung nach Anspruch 1, wobei das Ethylencopolymer einen Schmelzindex getested nach ASTM D 1238 (190°C/2.16 kg) von nicht mehr als etwa 1 aufweist.

3. Die Zusammensetzung nach Anspruch 1, wobei das Ethylencopolymer Ethylenvinylacetat ist.

4. Die Zusammensetzung nach Anspruch 3, wobei das Ethylencopolymer einen Vinylacetatgehalt von mehr als 10 Gew.-% aufweist.

5. Die Zusammensetzung nach Anspruch 1, wobei die Zusammensetzung bei Raumtemperatur fluide ist.

6. Die Zusammensetzung nach Anspruch 1, wobei die Zusammensetzung eine Schmelzviskosität von zwischen etwa 11.000 und 25.000 mPas (cps) bei 176.7°C (350°F) aufweist.

7. Ein feste Schmelze Material hergestellt aus der Zusammensetzung nach Anspruch 1.

8. Das feste Schmelze Material nach Anspruch 7, wobei das feste Schmelze Material eine maximale Zugfestigkeit von mehr als 1654.7 kPa (240 psi) aufweist.

9. Das feste Schmelze Material nach Anspruch 7, wobei das feste Schmelze Material eine maximale Zugfestigkeit von mehr als etwa 2068.4 kPa (300 psi) aufweist.

10. Das feste Schmelze Material nach Anspruch 7, wobei das feste Schmelze Material eine Reißenergie von mehr als 0.18 Joules aufweist.

11. Das feste Schmelze Material nach Anspruch 7, wobei das feste Schmelze Material eine Reißenergie von mehr als etwa 0.6 Joules aufweist.

12. Eine Verpackungskonstruktion umfassend:
ein Substrat; und
ein feste Schmelze Material umfassend zu einem Zeitpunkt vor der Anwendung,
mindestens eines aus einer Emulsion, Dispersion und Suspension
umfassend,
einen flüssigen Träger ausgewählt aus der Gruppe bestehend aus Öl, Olefinoligomeren, Polybuten, Polyisopren, und Kombinationen davon, und
ein festes Teilchen umfassend ein Ethylencopolymer mit einem Schmelzindex getestet nach ASTM D 1238 (190°C/2.16 kg) von weniger als 2.0, wobei das feste Schmelze Material eine Abbindezeit bei 198.9°C (390°F) von weniger als 1.0 Sekunden aufweist.

13. Die Verpackungskonstruktion nach Anspruch 12, wobei die Konstruktion ausgewählt ist aus der Gruppe bestehend aus seiner Schachtel, einem Karton oder einer Schale.

14. Die Verpackungskonstruktion nach Anspruch 13, wobei die Verpackungskonstruktion in einem Kühl- oder Gefrierschrank gelagert wird.

15. Die Verpackungskonstruktion nach Anspruch 12, wobei das feste Schmelze Material eine Bindungsfestigkeit von mindestens etwa 22.3 N (5 1bf) aufweist.

## Revendications

1. Composition comportant :
au moins un élément parmi une émulsion, une dispersion et une suspens
ion comportant
un support liquide choisi parmi le groupe constitué d'une huile, d'oligomères d'oléfine, de polybutène, de polyisoprène et de combinaisons de ceux-ci, et
une particule solide comportant un copolymère d'éthylène, le copolymère d'éthylène ayant un indice de fluidité lorsqu'il est testé selon l'ASTM D 1238 (190 °C/2,16 kg) non supérieur à environ 2.

2. Composition selon la revendication 1, dans laquelle le copolymère d'éthylène a un indice de fluidité lorsqu'il est testé selon l'ASTM D 1238 (190 °C/2,16 kg) non supérieur à environ 1.

3. Composition selon la revendication 1, dans laquelle le copolymère d'éthylène est l'acétate de vinyle-éthylène.

4. Composition selon la revendication 3, dans laquelle le copolymère d'éthylène a une teneur en acétate de vinyle supérieure à 10 % en poids.

5. Composition selon la revendication 1, dans laquelle la composition est fluide à température ambiante.

6. Composition selon la revendication 1, dans laquelle la composition a une viscosité à l'état fondu comprise entre environ 11 000 et 25 000 mPas (cps) à 176,7 °C (350 °F).

7. Matière solide fondue formée à partir de la composition de la revendication 1.

8. Matière solide fondue selon la revendication 7, la matière solide fondue ayant une résistance maximale à la traction supérieure à 1 654,7 kPa (240 psi).

9. Matière solide fondue selon la revendication 7, la matière solide fondue ayant une résistance maximale à la traction supérieure à environ 2 068,4 kPa (300 psi).

10. Matière solide fondue selon la revendication 7, la matière solide fondue ayant une énergie à la rupture supérieure à 0,18 Joule.

11. Matière solide fondue selon la revendication 7, la matière solide fondue ayant une énergie à la rupture supérieure à environ 0,6 Joule.

12. Construction d'emballage comportant :
un substrat, et
une matière solide fondue comportant, à un instant précédant l'application,
au moins un élément parmi une émulsion, une dispersion et une suspension comportant
un support liquide choisi parmi le groupe constitué d'une huile, d'oligomères d'oléfine, de polybutène, de polyisoprène et de combinaisons de ceux-ci, et
une particule solide comportant un copolymère d'éthylène, le copolymère d'éthylène ayant un indice de fluidité lorsqu'il est testé selon l'ASTM D 1238 (190 °C/2,16 kg) inférieur à environ 2, la matière solide fondue présentant un temps d'adhérence à 198,9 °C (390 °F) inférieur à environ 1,0 seconde.

13. Construction d'emballage selon la revendication 12, la construction étant choisie parmi un groupe constitué d'une caisse, d'un carton ou d'un plateau.

14. Construction d'emballage selon la revendication 13, la construction d'emballage étant stockée dans un réfrigérateur ou un congélateur.

15. Construction d'emballage selon la revendication 12, dans laquelle la matière solide fondue présente une résistance d'adhésion d'au moins environ 22,3 N (5 lbf).
